(19)

Europäisches
Patentamt

European
Patent Office

Office européen
des brevets

(11) **EP 2 469 231 A1**

(12) **EUROPEAN PATENT APPLICATION**

(43) Date of publication:
**27.06.2012 Bulletin 2012/26**

(21) Application number: **10196550.7**

(22) Date of filing: **22.12.2010**

(51) Int Cl.:
*G01C 21/34* *(2006.01)*     *G01C 21/36* *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Sony Ericsson Mobile
Communications AB
221 88 Lund (SE)**

(72) Inventor: **Siotis, Gerog
224 71, Lund (SE)**

(74) Representative: **VALEA AB
Lindholmspiren 5
417 56 Göteborg (SE)**

(54) **Method and arrangement relating to navigation**

(57)     The present invention relates to a navigation
system (100) comprising a navigation device (10) and a
data providing device (20). The data providing device is
configured to monitor a user and provided said navigation
device (10) with biometric data relating to at least one
physical behaviour of said user.

Fig. 1

EP 2 469 231 A1

**Description**

TECHNICAL FIELD

The present invention relates to a navigation arrangement in general and a navigation arrangement with enhanced functionality in particular.

BACKGROUND

Navigation applications allow a user to map routes. Furthermore, the incorporation of GPS units and navigation applications provide users turn by turn directions from such applications, e.g. when operating a moving vehicle or walking. Furthermore, navigation applications have evolved to provide rudimentary information to users, such as traffic situation, weather conditions, tourist info etc.

The rapid development of the electrical systems and their miniaturization allow navigation systems also to be incorporated into handheld devices such as mobile phones, PDAs etc.

Navigation devices that include GPS (Global Positioning System) signal reception and processing functionality are well known and are widely employed as in-car or other vehicle navigation systems. In general terms, a modern navigation device comprises a processor, memory, and map data stored within the memory. The processor and memory cooperate to provide an execution environment in which a software operating system may be established, and additionally it is commonplace for one or more additional software programs to be provided to enable the functionality of the device to be controlled, and to provide various other functions.

Presently a number of techniques for choosing navigation routes exist. These comprise methods using the fastest, shortest, the route avoiding specific points (e.g. toll highways), the route optimized for eco-driving, etc.

Car navigation algorithms use a variety of different optimization methods. For example, when calculating the "optimum" way to travel from point A to point B, the "cost" for the different routs is calculated and added, and a decision is made upon their value.

One type of "cost" could be the distance (shortest route), another type would be the distance divided by the speed limits of the roads (fastest route), and yet another one uses the actual speed of the vehicles on that very road at a certain clock time. This data may be sent to a server that helps optimize the route based on different parameters, such as traffic congestion data, etc.

Recent studies show that driving behavior is influenced by aesthetics. Aesthetically rewarding traffic environments seem to be beneficial for traffic safety. It is likely that drivers display lower speed in beautiful rather than ugly traffic environments, not spontaneously and directly as an effect of aesthetics, but after a sequence of driving and stop over. This is for example described in a thesis work "Are Beautiful traffic environments safer than Ugly traffic environments?" by Helena Drottenborg, Department of Technology and Society, Institute of Traffic Engineering, Lund Institute of Technology And Environmental Psychology Unit, Institute of Architecture, Lund Institute of Technology and Department of Landscape Planning, the Swedish University of Agricultural Sciences, Lund's University 2002. It was also shown that the heart rate and eye-blink was affected by the environment around the driver.

SUMMARY

The proposed invention enhances the overall navigation proposition by adding at least one new parameter based on the driver behavior. The driver behavior is detected by measuring at least one of a physiological or biometric value.

Thus, the proposed method uses user related parameters, such as heart rate, heart sound, pulse, blood pressure, glucose levels, electromyogram signal levels (EMG), etc., or eye-blink rate, pupillary size, or any other parameter giving a measure on how tense the driver is, as one of the main parameters when determining routes.

For these reasons, a navigation system is provided comprising a navigation device and a data providing device. The data providing device is configured to monitor a user and provided the navigation device with physiological and/or biometric data of the user. The physiological and/or biometrical data is at least one of heart rate, heart sound, pulse, blood pressure, glucose levels, electromyogram signal level (EMG), eye-blink rate, pupillary size, or a parameter giving a measure on the user's stress level. In one embodiment, the system further comprises a sensor for detecting one or several of heart rate, heart sound, pulse, blood pressure, glucose levels, electromyogram signal level (EMG). In one embodiment the system further comprise a sensor for detecting user eye related parameters.

The invention also relates to a navigation device comprising: a processor configured to access digital map data and calculate a route to a destination. The route comprises one or more manoeuvres. The navigation device further comprises: a store for user related parameter data, which data indicates a the position of a specific parameter related to a user in the digital map, a data interrogator that is configured to access the user related parameter data store to determine whether there is a specific user parameter in the vicinity of a the manoeuvre, and a navigation instruction generator operable in the event that the data interrogator determines that a the parameter is located in the vicinity of the manoeuvre to generate for that manoeuvre an enhanced navigation instruction that refers to the parameter for provision to a user of the navigation device. The user related parameter data is physiological and/or biometrical data at least one of heart rate, heart sound, pulse, blood pressure, glucose levels, electromyogram signal level (EMG), eye-blink rate, pupillary size, or a parameter giving a measure on the user's stress level. The device may further comprising an interface for communication with a sensor for detecting one or several of heart rate, heart sound, pulse, blood pressure, glucose levels, electromyogram signal level (EMG). The device may further comprise an interface for communication with a sensor for detecting user eye related parameters. The device may further comprise a communication interface, a user input/output interface portion, and a positioning unit.

Preferably the device is a part of a mobile terminal.

The invention also relates to a method in a navigation system. The method comprise: obtaining a route enquiry, processing a number of parameters, wherein at least one of the parameters is related to a user biometric or physiologic value, and determining a route based on the processed parameters. The biometric or physiologic value is one or several of heart rate, heart sound, pulse, blood pressure, glucose levels, electromyogram signal level (EMG), eye-blink rate, pupillary size, or a parameter giving a measure on the user's stress level. The value is added to other navigations parameters. In one embodiment the value is used to automatically alert and navigate the user to a nearby care center.

BRIEF DESCRIPTION OF THE DRAWINGS

In the following, the invention will be further described in a non-limiting way under reference to the accompanying drawings in which:

Fig. 1 is a schematic block diagram of a navigation system according to the present invention,
Fig. 2 shows a schematic route determination map, and
Fig. 3 shows schematically some steps of a method according to the invention.

DETAILED DESCRIPTION

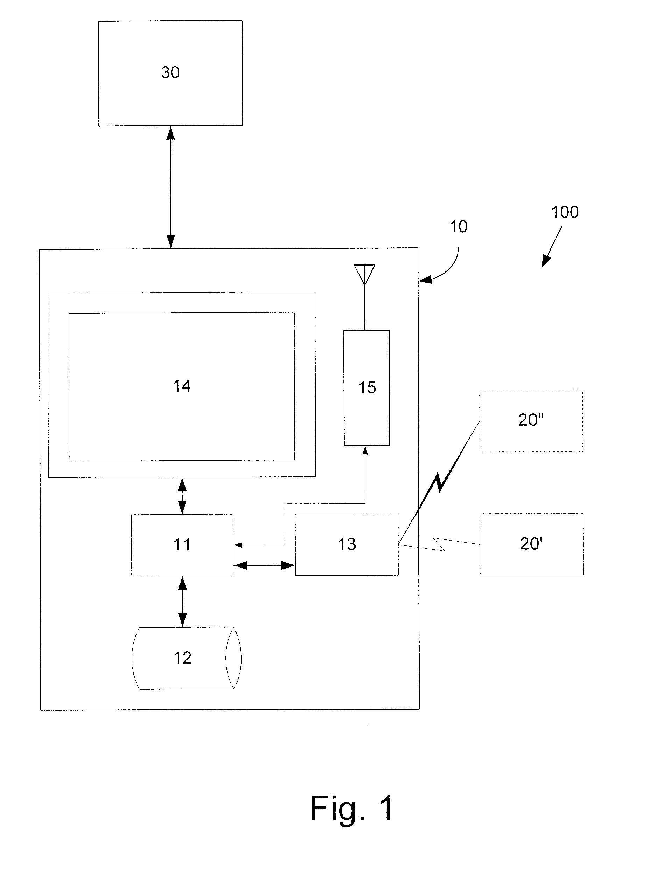

The present invention according to one exemplary embodiment is illustrated in Fig. 1 Fig. 1 illustrates schematically a navigation system 100, comprising a navigation device 10, at least one sensor device 20', 20" and a server 30.

The navigation device 10 comprises a controller 11, such as a micro-processor, a memory 12, a communication interface 13, a display 14 (or a user input/output interface portion) and a positioning or GPS unit 15.

The memory 12 may at least be one of volatile and non-volatile, and commonly both, and within the memory map data may be stored.

The controller 11 and memory 12 cooperate to provide an execution environment in which a software operating system may be established, and additionally it is commonplace for one or more additional software programs to be provided to enable the functionality of the navigation device to be controlled, and to provide various other functions.

The controller 11 controls varying functions of the navigation device 10 based on the executed instructions set. The memory unit may comprise instructions set executed by the controller and other data used for providing navigation instructions.

Typically the device comprises one or more input interfaces 14 that allow a user to interact with and control the device, and one or more output interfaces (14) by means of which information may be relayed to the user. Illustrative examples of output interfaces include a visual display and a speaker for audible output. Illustrative examples of input interfaces include one or more physical buttons to control on/off operation or other features of the device (which buttons need not necessarily be on the device itself but could be on a steering wheel if the device is built into a vehicle), and a microphone for detecting user speech. In a particularly preferred arrangement the output interface display may be configured as a touch sensitive display (by means of a touch sensitive overlay or otherwise) to additionally provide an input interface by means of which a user can operate the device by touch.

The navigation device may also include one or more physical connector interfaces by means of which power and optionally data signals can be transmitted to and received from the device, and optionally one or more wireless transmitters/receivers to allow communication over cellular telecommunications and other signal and data networks. The navigation device of this type also include a GPS antenna 16 by means of which satellite-broadcast signals, including location data, can be received and subsequently processed to determine a current location of the device. The positioning may also include cellular network positioning, triangulation etc.

The device may also include electronic gyroscopes and accelerometers (not shown) which produce signals that can be processed to determine the current angular and linear acceleration, and in turn, and in conjunction with location information derived from the GPS signal, velocity and relative displacement of the device and thus the vehicle or user. Typically such features are most commonly provided in in-vehicle navigation systems, but may also be provided in navigation devices if it is expedient to do so. The utility of such devices is their ability to determine a route between two points, typically a start or current location position, and a second point, i.e. the destination. These locations can be input by a user of the device, by any of a wide variety of different methods, for example by postcode, street name and house number, previously stored "well known" destinations (such as famous locations, municipal locations (such as sports grounds or swimming baths) or other points of interest), and favourite or recently visited destinations.

The navigation device may be enabled by software for computing a "best" or "optimum" route between the start and destination address locations from the map data. A "best" or "optimum" route is determined on the basis of predetermined criteria and need not necessarily be the fastest or shortest route, as will be described below. The selection of the route along which to guide the driver can be very sophisticated, and the selected route may take into account existing, predicted and dynamically and/or wirelessly received traffic and road information, historical information about road speeds, and the driver's own preferences for the factors determining road choice (for example the driver may specify that the route should not include motorways or toll roads) and also driver or user specific parameters.

In addition, the device may continually monitor road, traffic and driver/use conditions, and offer to or choose to change the route due to changed conditions.

As mentioned earlier, the navigation system of the present invention uses additional parameters related to the driver/use to determine a route. The additional parameters are physiological and/or biometrical measurements and may be at least one of heart rate (sound, pulse, blood pressure, glucose levels, electromyogram signal levels (EMG), etc., or eye-blink rate pupillary size, or any other parameter giving a measure on how tense the driver is.

Hence, the system comprises a measurement accessory for gathering and providing data to the navigation device.

For heartbeat measurement, a measuring device 20', in form of a Personal Hands Free (PHF), such as a wristwatch or a Bluetooth headset enabled to measure heart rate using sound, pulse or blood pressure sensors and communicating a signal corresponding to the heart beat of the driver/user to the navigator device may be used. Other measurement devices may include glucose meter, EMG meter for measure of the electric activity in a muscle, high-performance liquid chromatography for adrenalin measurement, etc.

For eye-blink rate and pupil size measurement, an optical device 20" such as a camera may be employed.

The measurement accessory and the navigation device may communicate through wire, radio frequency (especially Bluetooth) or optically.

The data gathered by the measurement accessory will be collected by the navigation device and may be processed onboard or transmitted to a server 30. The server may maintain all the collected data and build a physiological and/or biometric cost for a given part of a road. The physiological and/or biometric data may include heart rate, pulse level, blood pressure level, glucose levels, EMG levels, pupillary size, eye-blink rate, sound level, and stress levels, adrenalin level, etc.

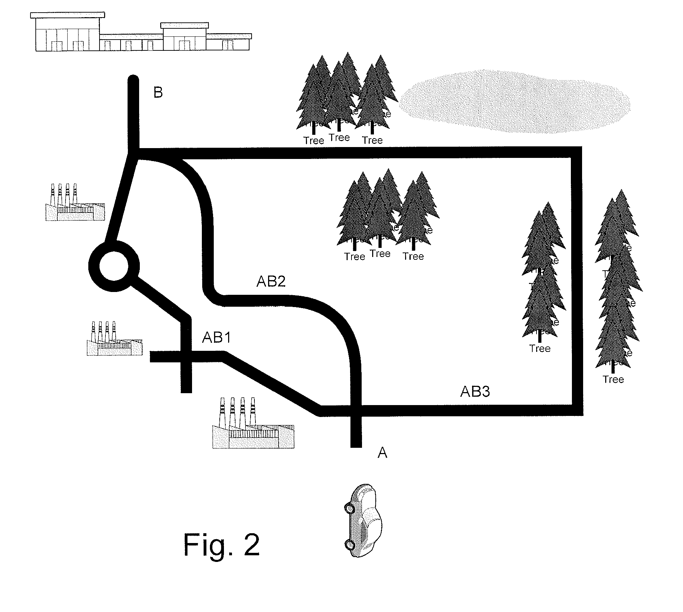

Fig. 2 illustrates in an exemplary way how a route determination according to the present invention may proceed.

The driver of a vehicle 30 plans to travel from point A to point B. According to the drawing there are three routs available: AB1, AB2 and AB3.

AB1 is appears to be the shortest route, but it extends through an industrial zone with complicated turns, crossings, traffic circles, and stressful traffic during rush hours. Moreover, the environment is ugly, which causes mental stress.

AB2 is also short but with hazardous high speed bends, which causes mental stress.

AB3 is a longer route but it runs through an environment giving conception of natural beauty, which distresses the driver and calms him down.

According to the studies, for example the theses work mentioned earlier, the less stressful environment influences the driver in a positive way with lower heart beat rate and eye-blink rate.

The present invention uses these facts to provide a novel parameter when determining a route.

A new parameter is added into the route cost computation: a low stress cost including at least one physiological or biometric cost. The physiological or biometric values are detected as mentioned earlier.

I the following only the heart rate is given as an example. In a centralized system, i.e. employing a central server, the heart rate of a number of users are monitored and processed. A heart rate value, e.g. 90 bpm (beats per minute) is calculated from values obtained from, e.g. 50 users and constitute a mean value for the drivers heart rate when drivers use AB1. The second route, AB2, may have the value 85 bpm as calculated mean value. The third route, AB3, may have the value 82 bpm as calculated mean value.

One can clearly see that AB1 is a "stressing" route to use based the augmented "heart rate cost" than AB2 and AB3.

Hence the system will use the heart rate as accost added to other parameters, such as route length, traffic situation, etc. used for calculating an effective route.

Of course, this may be an option on the navigator device, allowing the user to use the option for a less stressful driving.

In the case with, eye-blink rate or a combination thereof same principles may be applied.

An onboard system may operate in a similar way. The calculations and processing data is based only on the user(s) of the same device.

Preferably, the "heart rate cost" or "eye-blink cost" of different roads on a map may be calculated over different time periods of the day.

Thus the cost calculation may be summarized as:

$$Cost_{tot} = \Sigma\ Cost_n,\ n= Cost_{distance},\ Cost_{speed}, \ldots, Cost_{heartneat},\ Cost_{eye\text{-}blink}$$

If $Cost_{tot}(route_x) \leq Cost_{tot}(route_y)$
then $route_x$
else $route_y$

In another embodiment, the biometric data may be used to automatically alert and navigate the user to a nearby hospital or care center if the input data indicate a physical disorder.

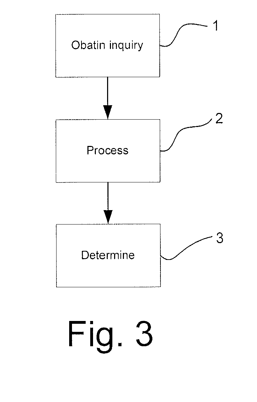

Fig. 3 illustrates the steps of a simplified method of the invention. In step 1 a route enquiry is obtained, the navigation device processes 2 a number of parameters, wherein at least one of the parameters is related to the user's biometric or physiologic value, and a route is determined 3 based on the processed parameters.

Most advantageously, the invention may be implemented in a mobile communication terminal, such as a mobile phone, which includes all features needed for navigation and data collection, and which wirelessly can communicate with a central unit.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented at least in part by means of both hardware and software, and that several "means", "units" or "devices" may be represented by the same item of hardware.

A "device" as the term is used herein, is to be broadly interpreted to include a radiotelephone having ability for GPS or network positioning, an organizer, a digital camera (e.g., video and/or still image camera), a personal communications system (PCS) terminal that may combine a cellular radiotelephone with data processing; a personal digital assistant (PDA) that can include a radiotelephone or wireless communication system and GPS; a laptop; and any other computation or communication device capable of positioning and transceiving, such as a personal computer, etc.

The various embodiments of the present invention described herein is described in the general context of method steps or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Software and web implementations of various embodiments of the present invention can be accomplished with standard programming techniques with rule-based logic and other logic to accomplish various database searching steps or processes, correlation steps or processes, comparison steps or processes and decision steps or processes. It should be noted that the words "component" and "module," as used herein and in the following claims, is intended to encompass implementations using one or more lines of software code, and/or hardware implementations, and/or equipment for receiving manual inputs.

The foregoing description of embodiments of the present invention, have been presented for purposes of illustration and description. The foregoing description is not intended to be exhaustive or to limit embodiments of the present invention to the precise form disclosed, and modifications and variations are possible in light of the above teachings or may be acquired from practice of various embodiments of the present invention. The embodiments discussed herein were chosen and described in order to explain the principles and the nature of various embodiments of the present invention and its practical application to enable one skilled in the art to utilize the present invention in various embodiments and with various modifications as are suited to the particular use contemplated. The features of the embodiments described herein may be combined in all possible combinations of methods, apparatus, modules, systems, and computer program products.

**Claims**

1. A navigation system (100) comprising a navigation device (10) and a data providing device (20), said data providing device being configured to monitor a user and provide said navigation device (10) with physiological and/or biometric data of said user.

2. The system of claim 1, wherein said physiological and/or biometrical data is at least one of heart rate, heart sound, pulse, blood pressure, glucose levels, electromyogram signal level (EMG), eye-blink rate, pupillary size, or a parameter giving a measure on said user's stress level.

3. The system of claim 1 or 2, further comprising a sensor for detecting one or several of heart rate, heart sound, pulse, blood pressure, glucose levels, electromyogram signal level (EMG).

4. The system of claim 1 or 2, further comprising a sensor for detecting user eye related parameters.

5. A navigation device (10) comprising: a processor (11) configured to access digital map data and calculate a route to a destination, said route comprising one or more manoeuvres, *characterised in* **that** the navigation device (10) further comprises: a store (12) for user related parameter data, which data indicates a the position of a specific parameter related to a user in said digital map, a data interrogator that is configured to access said user related parameter data store (12) to determine whether there is a specific user parameter in the vicinity of a said manoeuvre, and a navigation instruction generator operable in the event that said data interrogator determines that a said parameter is located in the vicinity of said manoeuvre to generate for that manoeuvre an enhanced navigation instruction that refers to said parameter for provision to a user of said navigation device (10).

6. The device of claim 5, wherein said user related parameter data is physiological and/or biometrical data at least one of heart rate, heart sound, pulse, blood pressure, glucose levels, electromyogram signal level (EMG), eye-blink rate, pupillary size, or a parameter giving a measure on said user's stress level.

7. The device of claim 5 or 6, further comprising an interface for communication with a sensor for detecting one or several of heart rate, heart sound, pulse, blood pressure, glucose levels, electromyogram signal level (EMG).

8. The device of claim 5 or 6, further comprising an interface for communication with a sensor for detecting user eye related parameters.

9. The device according to any of claims 5-8, further comprising a communication interface (13), a user input/output interface portion (14), and a positioning unit (15).

10. A mobile terminal comprising a device according to any of claims 6-10.

11. A method in a navigation system, the method comprising:

> • obtaining (1) a route enquiry,
> • processing (2) a number of parameters, wherein at least one of said parameters is related to a user biometric or physiologic value, and
> • determining (3) a route based on said processed parameters.

12. The method of claim 11, wherein said is biometric or physiologic value is one or several of heart rate, heart sound, pulse, blood pressure, glucose levels, electromyogram signal level (EMG), eye-blink rate, pupillary size, or a parameter giving a measure on said user's stress level.

13. The method of claim 11, wherein said value is added to other navigations parameters.

14. The method of claim 11, wherein said value is used to automatically alert and navigate the user to a nearby care center.

Fig. 1

B

AB2

AB1

AB3

A

Fig. 2

Fig. 3

**Europäisches Patentamt**
**European Patent Office**
**Office européen des brevets**

# EUROPEAN SEARCH REPORT

Application Number

EP 10 19 6550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 10 253379 A (NISSAN MOTOR)<br>25 September 1998 (1998-09-25)<br>* paragraphs [0005], [0011] - [0021] * | 1-4,<br>11-13<br>14 | INV.<br>G01C21/34<br>G01C21/36 |
| X<br><br>A | DE 10 2004 056868 A1 (HELLA KGAA HUECK & CO [DE]) 1 June 2006 (2006-06-01)<br>* paragraphs [0016], [0017], [0019], [0020], [0026], [0027] * | 1-4,<br>11-13<br>14 | |
| X<br><br>A | EP 1 291 226 A2 (PIONEER CORP [JP])<br>12 March 2003 (2003-03-12)<br>* paragraphs [0024] - [0031] *<br>* paragraphs [0052] - [0056], [0064] - [0067], [0071] - [0073], [0077], [0082], [0105] - [0113] *<br>* paragraphs [0001], [0008], [0012] * | 1-3,<br>11-13<br>14 | |
| X<br><br>A | JP 2007 322249 A (EQUOS RES CO LTD)<br>13 December 2007 (2007-12-13)<br>* paragraphs [0011], [0012], [0015] - [0019], [0054] - [0069] * | 1-4,<br>10-13<br>14 | |
| X<br>A | JP 2007 205765 A (EQUOS RES CO LTD)<br>16 August 2007 (2007-08-16)<br>* the whole document * | 1-4,<br>10-13<br>14 | TECHNICAL FIELDS SEARCHED (IPC)<br><br>G01C<br>B60K |
| X<br><br>A | JP 2008 015561 A (EQUOS RES CO LTD)<br>24 January 2008 (2008-01-24)<br>* paragraphs [0006], [0007], [0008], [0012] - [0014], [0021], [0022], [0025], [0030], [0031], [0040] - [0044], [0047] - [0049], [0062] - [0065] * | 1-3,<br>11-13<br>14 | |

-/--

~~The present search report has been drawn up for all claims~~

| Place of search | Date of completion of the search | Examiner |
|---|---|---|
| The Hague | 3 May 2011 | Bruinsma, Maarten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 10 19 6550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 304 250 A2 (PIONEER CORP [JP]) 23 April 2003 (2003-04-23) | 1-3 | |
| A | * paragraphs [0008], [0038], [0065] - [0067], [0087], [0097] - [0099], [0116] - [0121] * <br> * figures 7,8 * | 4,11-14 | |
| Y | JP 2004 243948 A (MAZDA MOTOR) 2 September 2004 (2004-09-02) * figure 8 * * paragraphs [0021], [0022], [0045], [0046] * | 14 | |

TECHNICAL FIELDS
SEARCHED      (IPC)

~~The present search report has been drawn up for all claims~~

| Place of search | Date of completion of the search | Examiner |
|---|---|---|
| The Hague | 3 May 2011 | Bruinsma, Maarten |

EPO FORM 1503 03.82 (P04C01)

| | |
|---|---|
| Europäisches Patentamt | |
| European Patent Office | **Application Number** |
| Office européen des brevets | EP 10 19 6550 |

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 11-14

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 10 19 6550

The Search Division considers that the present European patent application does not comply with the
requirements of unity of invention and relates to several inventions or groups of inventions, namely:

```
1. claims: 1-4, 11-14

        Navigation system with a device to monitor
        physiological/biometric data of a user
        Method for determining an optimal route based on
        biometric/physiological parameters

1.1. claims: 11-14

        Method for determining an optimal route based on
        biometric/physiological parameters
                            ---

2. claims: 5-10

        Navigation system storing digital map data augmented with
        user related parameter data used to generate enhanced
        navigation instructions
                            ---
```

Please note that all inventions mentioned under item 1, although not
necessarily linked by a common inventive concept, could be searched
without effort justifying an additional fee.

## ANNEX TO THE EUROPEAN SEARCH REPORT
## ON EUROPEAN PATENT APPLICATION NO.

EP 10 19 6550

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2011

| Patent document cited in search report | | | Publication date | Patent family member(s) | | | Publication date |
|---|---|---|---|---|---|---|---|
| JP | 10253379 | A | 25-09-1998 | NONE | | | |
| DE | 102004056868 | A1 | 01-06-2006 | NONE | | | |
| EP | 1291226 | A2 | 12-03-2003 | DE<br>JP<br>JP<br>US | 60214946<br>4514372<br>2003061939<br>2003043045 | T2<br>B2<br>A<br>A1 | 06-09-2007<br>28-07-2010<br>04-03-2003<br>06-03-2003 |
| JP | 2007322249 | A | 13-12-2007 | NONE | | | |
| JP | 2007205765 | A | 16-08-2007 | NONE | | | |
| JP | 2008015561 | A | 24-01-2008 | NONE | | | |
| EP | 1304250 | A2 | 23-04-2003 | DE<br>JP<br>US | 60214312<br>2003118421<br>2003073886 | T2<br>A<br>A1 | 20-09-2007<br>23-04-2003<br>17-04-2003 |
| JP | 2004243948 | A | 02-09-2004 | JP | 4320773 | B2 | 26-08-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HELENA DROTTENBORG.** Are Beautiful traffic environments safer than Ugly traffic environments?. Institute of Architecture, Lund Institute of Technology and Department of Landscape Planning, 2002